# EUROPÄISCHE PATENTSCHRIFT

(11) **EP 1 196 233 B1**
(45) Veröffentlichungstag und Bekanntmachung des Hinweises auf die Patenterteilung: **13.10.2004**
(21) Anmeldenummer: 00954508.8
(22) Anmeldetag: 14.07.2000
(51) Int. Cl.: B01D 53/14

(54) **VERFAHREN ZUM ENTFERNEN VON MERCAPTANEN AUS FLUIDSTRÖMEN**
METHOD FOR REMOVING MERCAPTANS FROM FLUID FLUXES
PROCEDE PERMETTANT DE SUPPRIMER DES MERCAPTANS DE COURANTS DE FLUX

(30) Priorität: 15.07.1999 DE 19933301
(43) Veröffentlichungstag der Anmeldung: 17.04.2002
(73) Patentinhaber: BASF AKTIENGESELLSCHAFT, 67056 Ludwigshafen (DE)
(72) Erfinder: HUGO, Randolf, 67246 Dirmstein (DE); WAGNER, Rupert, 67551 Worms (DE); HOLST, Thomas, S., S.W. Calgary, Alberta T3C 1J3 (CA); GROSSMANN, Christoph, 67117 Limburgerhof (DE)
(74) Vertreter: Kinzebach, Werner, Dr.
(86) Internationale Anmeldenummer: PCT/EP2000/006749
(87) Internationale Veröffentlichungsnummer: WO 2001/005488

(56) Entgegenhaltungen:
- WO-A-00/00271
- DE-A- 3 717 556
- US-A- 4 840 777
- US-A- 4 853 012
- US-A- 5 462 721
- US-A- 5 705 090

## Beschreibung

Die vorliegende Erfindung betrifft ein Verfahren zum Entfernen von Mercaptanen aus mercaptanhaltigen Fluidströmen, insbesondere aus Kohlenwasserstoffgasen, wie beispielsweise Erdgas, Synthesegas aus Schweröl oder schweren Rückständen oder Raffineriegas, oder auch aus flüssigen Kohlenwasserstoffen, wie beispielsweise LPG (liquefied petroleum gas).

In zahlreichen Prozessen in der chemischen Industrie treten Fluidströme auf, die Sauergase, wie z.B. CO₂, H₂S, SO₂, CS₂, HCN, COS oder Mercaptane als Verunreinigungen enthalten.

Bei den hier in Rede stehenden LPG- oder Gasströmen kann es sich beispielsweise um Kohlenwasserstoffgase aus einer Erdgasquelle, Synthesegase aus chemischen Prozessen oder etwa um Reaktionsgase bei der partiellen Oxidation von organischen Materialien, wie beispielsweise Kohle oder Erdöl, handeln. Die Entfernung von Schwefelverbindungen aus diesen Fluidströmen ist aus unterschiedlichen Gründen von besonderer Bedeutung. Beispielsweise muß der Gehalt an Schwefelverbindungen von Erdgas durch geeignete Aufbereitungsmaßnahmen unmittelbar an der Erdgasquelle reduziert werden, denn üblicherweise enthält das Erdgas neben den oben aufgeführten Schwefelverbindungen auch einen gewissen Anteil an mitgeführtem Wasser. In wäßriger Lösung liegen diese Schwefelverbindungen aber als Säuren vor und wirken korrosiv. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übelriechend und, allen voran Schwefelwasserstoff (H₂S), extrem toxisch.

Auch der CO₂-Gehalt von Kohlenwasserstoffgasen, wie Erdgas, muß üblicherweise deutlich reduziert werden, da hohe Konzentrationen von CO₂ den Brennwert des Gases verringern und ebenfalls Korrosion an Leitungen und Armaturen hervorrufen können.

Es wurden daher bereits zahlreiche Verfahren zum Entfernen von Sauergasbestandteilen aus Fluidströmen wie Kohlenwasserstoffgasen oder LPG entwickelt. Bei den am weitesten verbreiteten Verfahren wird das Sauergase enthaltende Fluidgemisch mit einem organischen Lösungsmittel oder einer wässrigen Lösung eines organischen Lösungsmittels bei einer sogenannten Gaswäsche in Kontakt gebracht.

Es existiert eine umfangreiche Patentliteratur zu Gaswaschverfahren und entsprechenden in diesen Verfahren eingesetzten Waschlösungen. Grundsätzlich kann man dabei zwei unterschiedliche Typen von Lösungsmitteln für die Gaswäsche unterscheiden:

Zum einen werden sog. physikalische Lösungsmittel eingesetzt, die auf einem physikalischen Absorptionsvorgang beruhen, d.h. die Sauergase lösen sich in dem physikalischen Lösungsmittel. Typische physikalische Lösungsmittel sind Cyclotetramethylensulfon (Sulfolan) und dessen Derivate, aliphatische Säureamide, NMP (N-Methylpyrrolidon) N-alkylierte Pyrrolidone und entsprechende Piperidone, Methanol und Gemische aus Dialkylethern von Polyethylenglykolen (Selexol®, Union Carbide, Danbury, Conn., USA).

Zum anderen werden chemische Lösungsmittel eingesetzt, deren Wirkungsweise auf dem Ablauf von chemischen Reaktionen beruht, bei denen die Sauergase in einfacher entfernbare Verbindungen umgewandelt werden. Beispielsweise werden bei den im industriellen Maßstab am häufigsten als chemische Lösungsmittel eingesetzten wässrigen Lösungen aus Alkanolaminen beim Durchleiten von Sauergasen Salze gebildet, die entweder durch Erhitzen zersetzt und/oder mittels Dampf abgestrippt werden können. Die Alkanolaminlösung wird durch das Erhitzen oder Strippen regeneriert, so daß sie wiederverwendet werden kann. Bevorzugte, beim Entfernen von Sauergasverunreinigungen aus Kohlenwasserstoffgasströme verwendete Alkanolamine umfassen Monoethanolamin (MEA), Diethanolamin (DEA), Triethanolamin (TEA), Diisopropylamin (DIPA), Diglycolamin (DGA) und Methyldiethanolamin (MDEA).

Primäre und sekundäre Alkanolamine sind insbesondere für Gaswäschen geeignet, bei denen das gereinigte Gas einen sehr niedrigen CO₂-Gehalt aufweisen muß (z.B. 10 ppmᵥ CO₂). Für das Entfernen von H₂S aus Gasgemischen mit einem hohen ursprünglichen CO₂-Gehalt macht sich jedoch nachteilig bemerkbar, daß die Wirksamkeit der Lösung zum Entfernen von H₂S durch eine beschleunigte Absorption von CO₂ stark verringert wird. Außerdem werden bei der Regeneration von Lösungen der primären und sekundären Alkanolamine große Mengen an Dampf benötigt.

Aus der Europäischen Patentanmeldung EP-A-0 322 924 ist beispielsweise bekannt, daß tertiäre Alkanolamine, insbesondere MDEA, besonders geeignet sind für eine selektive Entfernung von H₂S aus Gasgemischen, die H₂S und CO₂ enthalten.

In der deutschen Patentanmeldung DE-A-1 542 415 wurde vorgeschlagen, die Wirksamkeit sowohl von physikalischen Lösungsmitteln wie auch von chemischen Lösungsmitteln durch Zugabe von Monoalkylalkanolaminen oder von Morpholin und dessen Derivate zu erhöhen. In der deutschen Patentanmeldung DE-A-1 904 428 wird die Zugabe von Monomethylethanolamin (MMEA) als Beschleuniger zur Verbesserung der Absorptionseigenschaften einer MDEA-Lösung beschrieben.

In dem US-Patent US 4,336,233 wird eine der derzeit wirksamsten Waschlösungen zum Entfernen von CO₂ und H₂S aus einem Gasstrom beschrieben. Es handelt sich dabei um eine wäßrige Lösung von etwa 1,5 bis 4,5 mol/l Methyldiethanolamin (MDEA) und 0,05 bis 0,8 mol/l Piperazin als Absorptionsbeschleuniger (aMDEA®, BASF AG, Ludwigshafen). Das Entfernen von CO₂ und H₂S unter Verwendung von MDEA wird ferner in den folgenden Patenten der Anmelderin detaillierter beschrieben: US 4,551,158; US 4,553,984; US 4,537,753; US 4,999,031, CA 1 291 321 und CA 1 295 810. Das Entfernen von Mercaptanen aus mercaptanhaltigen Gasströmen wird in diesen Schutzrechten nicht erwähnt.

Mercaptane sind substituierte Formen von H2S, bei denen eines der Wasserstoffatome durch einen Kohlenwasserstoffrest R ersetzt ist. Ihre allgemeine Formel lautet daher: RSH. Die Eigenschaften der Mercaptane hängen weitgehend von der Länge der Kohlenwasserstoffkette ab. Mercaptane wirken in wäßriger Lösung ebenfalls als Säure, jedoch wesentlich schwächer als beispielsweise H₂S. Mit zunehmender Länge der Kohlenwasserstoffkette verhalten sich Mercaptane daher wie Kohlenwasserstoffe, was ihre Entfernung aus Kohlenwasserstoffgasströmen besonders schwierig gestaltet. So wird beispielsweise in der Literatur berichtet, daß mit MEA- und DEA-Lösungen ca. 45 bis 50% Methylmercaptan, aber nur noch 20 bis 25% Ethylmercaptan und nur noch 0 bis 10% Propylmercaptan entfernt werden können (A. Kohl, R. Nielsen: "Gas Purification", 5^{th} Edition, 1997, S.155). In "Gas Conditioning and Processing", Vol. 4: "Gas Treating and Liquid Sweeting", 4^{th} Ed., J.M. Campbell & Company, 1998, wird auf S. 51 berichtet, daß wäßrige Aminlösungen nicht oder nur eingeschränkt zum Entfernen von Mercaptanen aus Gasströmen geeignet sind. Mercaptane kommen in einigen Erdgasquellen, insbesondere auf dem nordamerikanischen Kontinent vor und sind typischerweise in den meisten flüssigen oder verflüssigten raffinierten Kohlenwasserstoffprodukten (LPG) enthalten. Auch Mercapatane müssen jedoch aufgrund ihrer korrosiven und übelriechenden Eigenschaften aus Kohlenwasserstoffgasen oder -flüssigkeiten weitgehend entfernt werden. Üblicherweise sollen aufbereitete und gereinigte Kohlenwasserstoffe, wie sie etwa für Polymerisationsreaktionen eingesetzt werden, nicht mehr als 1 - 20 ppm Mercaptane enthalten.

Zum Entfernen von Mercaptanen aus mercaptanhaltigen Fluidströmen werden in der Literatur unterschiedlichste Lösungsansätze vorgeschlagen:

In dem US-Patent US 4,808,765 wird ein dreistufiger Prozeß zur Entfernung von Sauergasen aus einem gasförmigen Kohlenwasserstoffstrom beschrieben. In einem ersten Absorptionsprozeß werden in einem wässrigen Lösungsmittel, welches MDEA als selektives H₂S-Absorptionsmittel und DIPA als selektives COS-Absorptionsmittel enthält, H₂S weitgehend und COS teilweise entfernt. In einem zweiten Prozeßschritt, welcher eine wäßrige alkalische Lösung eines primären Alkanolamins als Waschlösung verwendet, wird ein Großteil des restlichen COS entfernt. Im dritten Schritt schließlich werden Mercaptane mit Hilfe einer wässrigen Alkalilösung (NaOH) entfernt. Dieses Verfahren ist apparativ sehr aufwendig, da die einzelnen Waschlösungen separat regeneriert werden müssen. Auch der Kohlenwasserstoffgasstrom muß anschließend noch mit Wasser gewaschen werden, um Reste der Alkalilösung zu entfernen.

In dem US-Patent 4,462,968 wird darauf hingewiesen, daß herkömmliche Alkanolamin-Lösungen zwar H₂S bis auf Konzentrationen von weniger als 4 ppm entfernen können, daß diese Verfahren jedoch zum Entfernen von Mercaptanen nicht geeignet sind. US 4,462,968 schlägt daher eine Waschlösung zum Entfernen von Mercaptanen vor, die aus Wasserstoffperoxid oder einer Kombination von Wasserstoffperoxid mit Ammoniak oder mit einem Amin besteht. Dieses Verfahren kann jedoch nur bei Gasströmen mit einem Schwefelgehalt von maximal 50 ppm in einem einstufigen Prozeß angewandt werden. Bei höherem Schwefelgehalt muß ein zweistufiger Prozeß durchgeführt werden, bei welchem zunächst H₂S mit Hilfe einer Alkanolamin-Waschlösung entfernt wird, während in der zweiten Stufe Mercaptane, Sulfide und Disulfide mit einer wasserstoffperoxidhaltigen Waschlösung beseitigt werden.

In dem US-Patent 4,484,934 wird ein physikalisches Lösungsmittel zum Entfernen von Mercaptanen und anderen Schwefelverbindungen aus einem Gasstrom beschrieben, welches aus unverdünntem Methoxyethyl-Pyrrolidon besteht. Weiterhin wird ein Lösungsmittel beschrieben, welches aus Wasser, Amin und Methoxyethyl-Pyrrolidon besteht.

Schließlich wird in der internationalen Patentanmeldung WO 95/13128 ein Verfahren und ein Lösungsmittel zur Absorption von Mercaptanen aus Gasströmen beschrieben, wobei die Waschlösung einen Polyalkylenglykol-Alkylether, beispielsweise Methoxytriglykol, ein sekundäres Monoalkanolamin und ggf. weitere Amine, wie MDEA oder DEA umfaßt.

Die Verwendung eines physikalischen Lösungsmittels wie Methoxytriglykol zur Beseitigung von Mercaptanen aus Gasströmen ist jedoch mit Nachteilen behaftet. Physikalische Lösungsmittel werden typischerweise im Überschuß gefahren, so daß nicht nur Mercaptane sondern auch ein großer Anteil von Wertprodukt, im Fall von Erdgas also Kohlenwasserstoffgase, in dem Lösungsmittel absorbiert werden. Die mit steigendem Druck zunehmende Absorption von Kohlenwasserstoffen ist besonders bei einer unter hohem Druck betriebenen Erdgaswäsche nachteilig. Das absorbierte Wertprodukt wird dann nämlich entweder als Flashgas verbrannt und geht somit verloren oder wird zum Absorber-Feed zurückgeführt, was wegen der erforderlichen Rekompression und wegen der Erhöhung des internen Stroms zu einer Vergrößerung der Anlage und zu höheren Betriebskosten führt.

Der vorliegenden Erfindung liegt daher das technische Problem zugrunde, ein Verfahren zum Entfernen von Sauergasbestandteilen aus gasförmigen oder flüssigen Kohlenwasserstoffströmen anzugeben, welches neben anderen Sauergasbestandteilen auch Mercaptane zuverlässig entfernt und dabei einfach und kostengünstig realisierbar ist.

Gelöst wird diese Aufgabe durch das Verfahren des vorliegenden Anspruchs 1. Erfindungsgemäß wird ein Verfahren zum Entfernen von Mercaptanen aus einem Fluidstrom bereitgestellt, welcher Mercaptane und weitere Sauergase, zumindest CO₂ und/oder H₂S, enthält, wobei man den Fluidstrom in einer Absorptions- oder Extraktionszone mit einer Waschflüssigkeit in innigen Kontakt bringt, die wenigstens ein tertiäres aliphatisches Alkanolamin mit bis zu 12 C-Atomen und 0,5 bis 15 Gew.-% eines gesättigten 5- oder 6-gliedrigen N-Heterocyclus, der gegebenenfalls weitere Heteroatome enthält, ausgewählt unter Q und N, als Aktivator enthält, und wobei man der Absorptions- oder Extraktionszone eine solche Menge der Waschflüssigkeit zuführt, daß sie bezogen auf die zu entfernenden sauren Gase einen Überschuß des aliphatischen Alkanolamins enthält und CO₂ und H₂S bis auf höchstens 500 ppm CO₂ und 10 ppm H₂S aus dem Fluidstrom entfernt werden. Der innige Kontakt von Fluidstrom und Waschflüssigkeit in der Absorptionszone sorgt dafür, daß Mercaptane und andere Sauergase von der Waschflüssigkeit aufgenommen werden. Anschließend trennt man den weitgehend gereinigten Fluidstrom und die beladene Waschflüssigkeit voneinander und führt den Fluidstrom und die Waschflüssigkeit aus der Absorptions- oder Extraktionszone ab. Die mit Mercaptanen und anderen Sauergasbestandteilen beladene und aus der Absorptionszone abgeführte Waschflüssigkeit wird üblicherweise anschließend regeneriert. Die regenerierte Waschflüssigkeit kann dann in einem Kreislaufsystem der Absorptionszone wieder zugeführt werden.

Ein Fluidstrom kann in dem erfindungsgemäßen Verfahren ein gasförmiger oder flüssiger Kohlenwasserstoffstrom sein. Erdgas ist ein typisches Beispiel eines Gasstroms, wärend LPG ein Beispiel eines Flüssigkeitststroms ist.

In dem erfindungsgemäßen Verfahren ist die Waschflüssigkeit bevorzugt eine wäßrige Lösung und enthält besonders vorteilhaft 10 bis 70 Gew.% des aliphatischen Alkanolamins. Wenn im vorliegenden Zusammenhang von einem aliphatischen Alkanolamin die Rede ist, so kann dies auch ein Gemisch von unterschiedlichen Alkanolaminen bedeuten, wobei sich die vorstehend angegebenen prozentualen Angaben dann auf den Gesamtgehalt an Alkanolamin beziehen.

Das erfindungsgemäße Verfahren zeichnet sich gegenüber bekannten Verfahren zum Entfernen von Mercaptanen aus Fluidströmen dadurch aus, daß die verwendete Waschflüssigkeit nur einen geringen Anteil, vorzugsweise maximal 5 Gew.%, eines physikalischen Lösungsmittels für Mercaptane enthält. Besonders bevorzugt enthält die Waschflüssigkeit keines der üblichen physikalisches Lösungsmittel für Mercaptane. Während Mercaptane und andere Sauergase auch in Wasser und in Alkanolaminen eine gewisse Löslichkeit besitzen, so werden diese nicht als physikalische Lösungsmittel im eigentlichen Sinn angesehen. Vielmehr sollen unter dem Begriff "physikalisches Lösungsmittel" im vorliegenden Zusammenhang insbesondere die typischen bei der Gaswäsche verwendeten physikalischen Lösungsmittel, wie Cyclotetramethylensulfon (Sulfolan), aliphatische Säureamide, NMP, N-alkylierte Pyrrolidone, Methanol oder Alkyl- oder Dialkylether von Polyethylenglycol verstanden werden. Derartige Lösungsmittel werden bei der erfindungsgemäßen Waschflüssigkeit vorzugsweise nicht verwendet, da die erfindungsgemäß vorgesehene Überschußfahrweise mit einem zu hohen Verlust am Wertprodukt Kohlenwasserstoffgas verbunden wäre.

Wäßrige Alkanolamin-Lösungen wurden bisher lediglich zum Entfernen von H₂S und CO₂ verwendet. Überraschenderweise ist es nach dem erfindungsgemäßen Verfahren möglich, mit diesen an sich bekannten Waschflüssigkeiten auch Mercaptane aus Fluidströmen abzureichern. Besonders überraschend ist für den Fachmann die der Erfindung zugrundeliegende Beobachtung, daß es ausreicht, eine Absorptionskolonne so auszulegen, daß - soweit im Feedgas vorhanden - CO₂ und - soweit ebenfalls im Feedgas vorhanden - H₂S im wesentlichen vollständig aus dem Fluidstrom entfernt werden. Die dazu erforderliche Menge an Waschflüssigkeit führt dann gleichzeitig zu einer weitgehenden Beseitigung von Mercaptanen aus dem Fluidstrom. Beispielsweise kann bei Erdgas mit dem.erfindungsgemäßen Verfahren eine Verringerung des Mercaptangehalts von 75 % bis 95 % erzielt werden, was in der Literatur für eine sogenannte Aminwäsche, also eine Wäsche mit einer wässrigen Aminlösung als Waschflüssigkeit, schlicht als unmöglich angesehen wird.

Das Entfernen von CO₂ und H₂S aus einem kohlenwasserstoffhaltigen Fluidstrom ist dem Fachmann geläufig. Es existieren bereits kommerzielle Programme, die ausgehend von vorgegebenen Anlagenparametern und gewünschten Spezifikationen des gereinigten Gases oder LPG's, die Betriebsparameter für eine bestimmte Waschflüssigkeit berechnen können (beispielhaft sei hier das Programm TSWEET von Brian Research & Engineering genannt). Erfindungsgemäß wird vorgeschlagen, die Betriebsparameter so auszulegen, daß CO₂ und H₂S aus einem vorgegebenen Fluidstrom bis auf höchstens 500 ppm, bevorzugt auf 50 ppm CO₂ bzw. höchstens 10 ppm, bevorzugt 4 ppm H₂S abgereichert werden. Mit der daraus berechenbaren erforderlichen Waschflüssigkeitsmenge werden erfindungsgemäß auch der größte Teil der im Fluidstrom enthaltenen Mercaptane abgereichert.

Mit dem erfindungsgemäßen Verfahren können Mercaptane weitgehend aus dem Fluidstrom entfernt werden, während gleichzeitig nur relativ geringe Mengen an gasförmigen bzw., im Fall von LPG, flüssigen Kohlenwasserstoffen in der Waschflüssigkeit gelöst werden. Es geht also kaum Wertprodukt verloren und die Nachteile der herkömmlich zur Mercaptanentfernung verwendeten physikalischen Lösungsmittel werden vermieden. Typischerweise enthält die aus dem Absorptionsbereich abgeführte Waschflüssigkeit weniger als 1 Gew.% Kohlenwasserstoffe, bevorzugt weniger als 0,3 Gew.% Kohlenwasserstoffe und besonders bevorzugt weniger als 0,1 Gew.% Kohlenwasserstoffe.

Die Erfinder konnten feststellen, daß zur effektiven, d.h. weitgehenden Mercaptanentfernung (d. h. im Wesentlichen Methyl-, Ethyl- und Propylmercaptan) alle Sauergaskomponenten (beispielsweise bei einem Erdgasstrom hauptsächlich CO₂, H₂S, COS) entfernt werden müssen. Es gelingt nicht, Mercaptane weitgehend zu entfernen, während beispielsweise CO₂ oder H₂S nur unvollständig entfernt werden und etwa noch im Prozentbereich im behandelten Gas vorhanden sind. Die Absorption der einzelnen Komponenten erfolgt grob gesagt in der Reihenfolge der Säurestärke, d.h. im wesentlichen in der Reihenfolge H₂S, CO₂, COS, Mercaptane. Da die Mercaptane als sehr schwache Säure gewissermaßen als letzte Komponente von der Waschflüssigkeit absorbiert werden, wird erfindungsgemäß daher vorgeschlagen einen Überschuß an Waschflüssigkeit anzubieten, um neben H₂S, CO₂ und COS auch noch die Mercaptane absorbieren zu können. Die Erfinder stellten bei zu geringem Lösungsmitteleinsatz eine Verdrängung der Mercaptane durch die stärkeren Säuren fest, mit dem Ergebnis, daß nur wenig Mercaptane absorbiert wurden. Typische Werte, wie sie erfindungsgemäß etwa zur Erdgaswäsche gewählt werden, liegen häufig im Bereich zwischen 10 und 50 Liter Waschflüssigkeit pro Kubikmeter (s.t.p.) Sauergas im Gasstrom (m³ s.t.p. = m³ bei 0 °C und 101,325 kPa (1,01325 bar abs.)). Eine exakte Definition des Überschusses läßt sich jedoch nicht geben, da die Absorption von Sauergasbestandteilen in der erfindungsgemäß vorgesehenen Waschflüssigkeit nicht exakt stöchiometrisch erfolgt. Insbesondere orientiert sich das optimale Verhältnis von Waschflüssigkeit zu dem Sauergasanteil im Feedgas bzw. im Feed-LPG an den Gleichgewichtsbedingungen, die von den jeweiligen Betriebsparametern, im Fall einer Gaswäsche insbesondere von der Feedgastemperatur und dem Feedgasdruck, der Feedgaszusammensetzung, der Temperatur der (regenerierten) Waschflüssigkeit, der Restbeladung der Waschflüssigkeit, der Absorbersumpftemperatur, der Trennleistung der Kolonne (Packungshöhe bzw. Anzahl der Böden) usw. abhängen (wobei die Absorbersumpftemperatur üblicherweise kein freier Parameter ist, sondern sich aus der Absorptionswärme ergibt). Ausgehend von den beschriebenen grundsätzlichen Überlegungen kann der Fachmann den erforderlichen Überschuß an Waschflüssigkeit für die jeweiligen Betriebsbedingungen beispielsweise mit dem obenerwähnten Programm TSWEET berechnen und die Betriebsbedingungen ausgehend von den berechneten Werten anhand weniger Versuchsreihen in der Praxis optimieren.

Zwar existieren keine kommerziellen Programm zur Mercaptanentfernung mit einer Aminwäsche, da bislang Aminwäschen als für diesen Zweck ungeeignet angesehen wurden. Mit dem erfindungsgemäß vorgeschlagenen Verfahren läßt sich die Mercaptanentfernung aber auf die Entfernung der herkömmlicherweise mit einer Aminwäsche entfernbaren Sauergase CO₂ und H₂S zurückführen. Beispielsweise kann man mit dem Programm TSWEET eine Waschflüssigkeitsmenge berechnen, mit der eine 95 %ige Entfernung von CO₂ und H₂S erreicht wird. Diese theoretisch ermittelte Lösungsmittelmenge wird dann erfindungsgemäß um 5 bis 30 %, bevorzugt 10 bis 20 % erhöht. Mit diesem Überschuß kann nun auch der größte Teil der in dem Fluidstrom enthaltenen Mercaptane entfernt werden.

Als aliphatisches Alkanolamin wird ein tertiäres Alkanolamin, beispielsweise Triethanolamin (TEA) oder Methyldiethanolamin (MDEA), verwendet, wobei die Verwendung von MDEA besonders bevorzugt ist.

Die Waschflüssigkeit enthält außerdem als Aktivator einen gesättigten 5- oder 6-gliedrigen N-Heterocyclus, der gegebenenfalls weitere Heteroatome, ausgewählt unter O und N, enthält. Vorteilhaft ist der Aktivator ausgewählt aus der Gruppe bestehend aus Piperazin, Methylpiperazin und Morpholin. Als bevorzugter Aktivator wird in dem erfindungsgemäßen Verfahren Piperazin in einer Konzentration von 0,5 bis 15 Gew.%, besonders bevorzugt von 3 bis 8 Gew.% verwendet.

Das erfindungsgemäße Verfahren kann mit den üblichen in der Gaswäsche oder der LPG-Wäsche eingesetzten Waschvorrichtungen durchgeführt werden. Geeignete Waschvorrichtungen, die einen innigen Kontakt zwischen dem Fluidstrom und der Waschflüssigkeit gewährleisten, sind beispielsweise Füllkörper-, Packungs- und Bodenkolonnen, Radialstromwäscher, Strahlwäscher, Venturiwäscher und Rotations-Sprühwäscher, bevorzugt Packungs-, Füllkörper- und Bodenkolonnen.

In der Absorptionskolonne besitzt die Waschflüssigkeit typischerweise eine Temperatur von 40 bis 70 °C am Kolonnenkopf und von 50 bis 100 °C am Kolonnensumpf. Der Gesamtdruck in der Kolonne liegt im allgemeinen zwischen 1 und 120 bar, bevorzugt zwischen 10 und 100 bar.

Das erfindungsgemäße Verfahren kann in einem Schritt oder in mehreren aufeinanderfolgenden Teilschritten durchgeführt werden. Im letzteren Fall wird der die sauren Gasbestandteile enthaltende Fluidstrom in jedem Teilschritt mit jeweils einem Teilstrom der waschflüssigkeit in innigen Kontakt gebracht. Beispielsweise kann an unterschiedlichen Stellen der Absorptionszone ein Teilstrom des Absorptionsmittels zugeführt werden, wobei - etwa bei Verwendung einer Absorptionskolonne - die Temperatur der zugeführten Waschflüssigkeit in aufeinanderfolgenden Teilschritten in der Regel vom Sumpf zum Kopf der Kolonne abnimmt.

Die mit sauren Gasbestandteilen beladene Waschflüssigkeit kann regeneriert und anschließend mit verringerter Beladung in die Absorptionszone zurückgeführt werden. Typischerweise wird bei der Regeneration eine Druckentspannung der beladenen Waschflüssigkeit von einem in der Absorptionszone herrschenden höheren Druck auf einen niedrigeren Druck durchgeführt. Die Druckentspannung kann beispielsweise mittels eines Drosselventils geschehen. Ergänzend oder alternativ kann die Waschflüssigkeit über eine Entspannungsturbine geleitet werden, mit der ein Generator angetrieben und elektrische Energie gewonnen werden kann. Die so der Waschflüssigkeit bei der Entspannung entzogene Energie läßt sich beispielsweise auch zum Antrieb von Flüssigkeitspumpen im Kreislauf der Waschflüssigkeit verwenden.

Die Freisetzung der sauren Gasbestandteile kann beim Regenerieren der Waschflüssigkeit beispielsweise in einer Entspannungskolonne, beispielsweise einem senkrecht oder waagrecht eingebauten Flashbehälter oder einer Gegenstromkolonne mit Einbauten erfolgen. Es können mehrere Entspannungskolonnen hintereinander geschaltet werden, in denen bei unterschiedlichen Drücken regeneriert wird. Beispielsweise kann die Waschflüssigkeit zunächst in einer Vorentspannungskolonne bei hohem Druck, der beispielsweise ca. 1,5 bar über dem Partialdruck der sauren Gasbestandteile in der Absorptionszone liegt, und anschließend in einer Hauptentspannungskolonne bei niedrigem Druck, beispielsweise bei 1 bis 2 bar absolut, regeneriert werden. Bei einem mehrstufigen Entspannungsprozeß werden in der ersten Entspannungskolonne vorzugsweise Inertgase, wie absorbierte Kohlenwasserstoffe, und in den nachfolgenden Entspannungskolonnen die saure Gasbestandteile freigesetzt.

Mit Hilfe einer vorzugsweise ebenfalls vorgesehenen Strippung können bei der Regeneration weitere Sauergase aus der Waschflüssigkeit entfernt werden. Dazu werden die Waschflüssigkeit und ein Strippungsmittel, vorteilhaft ein heißes Gas, wobei Wasserdampf bevorzugt ist, im Gegenstrom durch eine mit Füllkörpern, Packungen oder Böden versehene Desorptionskolonne geleitet. Bevorzugt beträgt der Druck bei der Strippung 1 bis 3 bar absolut und die Temperatur 90 bis 130 °C.

Eine Regeneration der Waschflüssigkeit in mehreren aufeinanderfolgenden Teilschritten, wobei die Beladung der Waschflüssigkeit mit Sauergasbestandteilen mit jedem Teilschritt abnimmt, wird beispielsweise in US 4,336,233 beschrieben. Danach wird eine Grobwäsche mit reinem Entspannungskreislauf ohne Strippung durchgeführt, wobei die beladene waschflüssigkeit über eine Entspannungsturbine entspannt und schrittweise in einer Vorentspannungskolonne und einer Hauptentspannungskolonne regeneriert wird. Diese Variante kommt vor allem dann zum Einsatz, wenn die aus zuwaschenden sauren Gase hohe Partialdrücke aufweisen und wenn an die Reinheit des Reingases nur geringe Anforderungen gestellt werden.

In einer weiteren bevorzugten Ausführungsform des erfindungsgemäßen Verfahrens sind die in aufeinanderfolgenden Teilschritten des Wasch- bzw. Absorptionsvorgangs eingesetzten Teilströme der Waschflüssigkeit durch aufeinanderfolgende Teilschritte des Regenerationsvorgangs erhältlich und weisen ein abnehmende Beladung mit sauren Gasbestandteilen auf. Dabei ist insbesondere ein Verfahren bevorzugt bei dem das die sauren Bestandteile enthaltende Feedgas oder -LPG nacheinander mit einem ersten Teilstrom der Waschflüssigkeit, der nach teilweiser Regenerierung in einer Entspannungskolonne und vor der Strippung, und einem zweiten Teilstrom der Waschflüssigkeit, der nach der Strippung erhalten wird, in innigen Kontakt gebracht wird.

Beispielsweise kann, wie in US 4,336,233 beschrieben, der Absorptionsschritt in zwei Teilschritten, einer Grob- und einer Feinwäsche, und der Regenerierungsschritt schrittweise durch Druckentspannung in einer Entspannungsturbine, einer Vorentspannungskolonne und einer Hauptentspannungskolonne, sowie durch anschließende Strippung durchgeführt werden. In diesem Fall kann der Teilstrom der Waschflüssigkeit für die Grobwäsche von der Hauptentspannungskolonne und der Teilstrom für die Feinwäsche von der Strippung stammen.

Das regenerierte Absorptionsmittel wird üblicherweise vor Einspeisung in die Absorptionszone über einen Wärmetauscher geleitet und auf die für den Waschvorgang erforderliche Temperatur gebracht. Beispielsweise kann der die Strippkolonne verlassenden regenerierten Waschflüssigkeit Wärme entzogen und der noch Sauergasbestandteile enthaltenden Waschflüssigkeit vor deren Eintritt in die Strippkolonne zugeführt werden.

Das erfindungsgemäße Verfahren kann mit typischen zur Gaswäsche und anschließender Regeneration der Waschflüssigkeit verwendeten Anlagenkonfigurationen durchgeführt werden, wie sie beispielsweise in US 4,336,233 für einen einstufigen bzw. zweistufigen Waschprozeß und besonders ausführlich in EP-A 0 322 924 für einen einstufigen Waschprozeß mit Entspannungs- und Strippungsschritt beschrieben sind. Auf beide Dokumente wird hiermit ausdrücklich Bezug genommen.

Erfindungsgemäß wird außerdem vorgeschlagen, an sich bekannte aktivierte wäßrige Methyldiethanolamin-Lösungen, welche bisher lediglich zum Entfernen von CO₂ und H₂S aus Gasströmen verwendet wurden, auch zum Entfernen von Mercaptanen aus mercaptanhaltigen Fluidströmen zu benutzen. Gegenstand der vorliegenden Erfindung ist demnach auch die Verwendung einer aktivierten wässrigen MDEA-Lösung zum Entfernen von Mercaptanen aus mercaptanhaltigen Fluidströmen, inbesondere aus Kohlenwasserstoffgasen wie Erdgas oder aus LPG. Derartige Waschflüssigkeiten werden als hochkonzentrierte Lösung beispielsweise unter dem Markennamen aMDEA® (Hersteller: BASF AG, Ludwigshafen, Deutschland) mit Piperazin als Aktivator vertreiben. Der Anwender verdünnt die hochkonzentrierte Lösung soweit mit Wasser bis die Lösung in etwa folgende Zusammensetzung aufweist: 10 bis 70 Gew.% Methyldiethanolamin, zwischen 0,5 und 15 Gew.% Piperazin und zwischen 30 und 60 Gew.% Wasser.

Das erfindungsgemäße Verfahren wird im folgenden unter Bezugnahme auf die beigefügte Zeichnung näher erläutert. Die Figur der Zeichnung zeigt ein Anwendungsbeispiel des erfindungsgemäßen Verfahrens in einem einstufigen waschprozeß, dem sich eine Regeneration der waschflüssigkeit mit Entspannungs- und Strippkolonnen anschließt.

Bezugnehmend auf die Figur erkennt man eine bevorzugte Anordnung zur Durchführung des erfindungsgemäßen Verfahrens, wie sie beispielsweise zum Entfernen von Mercaptanen aus einem Mercapatane und weitere Sauergase enthaltenden Erdgasstrom verwendet wird.

Das Fluidgemisch, welches beispielsweise Erdgas als Wertprodukt enthalten kann, und darüber hinaus Sauergase wie H₂S, CO₂ und Mercaptane umfaßt, wird über eine Zuleitung 10 in eine Absorptionskolonne 11 geleitet. Vor dem Eintritt in die Absorptionskolonne können (nicht dargestellte) Trenneinrichtungen vorgesehen sein, welche beispielsweise Flüssigkeitströpfchen aus dem Rohgas entfernen. Die Absorptionskolonne 11 besitzt eine Absorptionszone 12, in welcher ein inniger Kontakt des sauren Rohgases mit einer an Sauergasen armen Waschflüssigkeit gewährleistet wird, die über eine Zuleitung 13 in den Kopfbereich der Absorptionskolonne 11 gelangt und im Gegenstrom zu dem zu behandelnden Gas geführt wird. Der Absorptionsbereich 12 kann beispielsweise durch Böden, etwa Sieb- oder Glockenböden, oder durch Packungen realisiert werden. Typischerweise werden 20 bis 34 Böden verwendet. Im Kopfbereich der Absorptionskolonne 11 können 1 bis 5 Rückwaschböden 14 angeordnet sein, um'den Verlust an leicht flüchtigen Bestandteilen der Waschflüssigkeit zu verringern. Die beispielsweise als Glockenböden ausgebildeten Rückwaschböden 14 werden über eine Kondensatleitung 15 mit Wasser gespeist, durch welches das behandelte Gas geleitet wird.

Der von Sauergasbestandteilen einschließlich der Mercaptane weitgehend befreite Erdgasstrom verläßt die Absorptionskolonne 11 über einen Kopfabzug 16. In der Leitung 16 kann - insbesondere wenn in der Kolonne 11 keine Rückwaschböden vorgesehen sind, ein (nicht dargestellter) Abscheider angeordnet sein, welcher mitgerissene Waschflüssigkeit aus dem Gasstrom entfernt.

Anstelle der hier beschriebenen einstufigen Absorptionseinrichtung kann auch eine zweistufige Variante verwendet werden, wie sie beispielsweise in Figur 2 des US-Patentes 4,336,233 dargestellt ist.

Die sauergashaltige Waschflüssigkeit verläßt die Absorptionskolonne 11 über eine Leitung 17 und gelangt über eine optional vorhandene Entspannungsturbine 18 und eine Leitung 19 in den Kopfbereich einer ersten Entspannungskolonne 20. In der Entspannungskolonne 20 wird der Druck der Waschflüssigkeit plötzlich erniedrigt, so daß die leichteren Kohlenwasserstoffe aus der Waschflüssigkeit abdampfen können. Diese Kohlenwasserstoffe können verbrannt oder in Absorptionskolonne 11 zurückgeführt werden. Das erfindungsgemäße Verfahren zeichnet sich aber dadurch aus, daß die der Anteil an absorbierten Kohlenwasserstoffen in der die Absorptionskolonne 11 verlassenden Waschflüssigkeit trotz des Überschußangebots an Waschflüssigkeit sehr gering ist. Auf eine aufwendige Rückführung der Kohlenwasserstoffe von der Entspannungskolonne 20 in die Absorptionskolonne 11 kann daher meist verzichtet werden. Die Waschflüssigkeit verläßt die erste Entspannungskolonne 20 über eine Leitung 21 am Boden der Kolonne, während die abgedampften Kohlenwasserstoffe über eine Leitung 22 am Kopf der Entspannungskolonne 20 abgezogen werden.

Im dargestellten Beispiel gelangt die Waschflüssikeit anschließend in eine zweite Entspannungskolonne 23, die beispielsweise als Niederdruckkolonne (d.h. als sogenannter Low-Pressure-Flash) ausgebildet sein kann. Schwerer flüchtige Sauergase dampfen, nach Durchtritt durch gegebenenfalls vorgesehene Rückwaschböden 24, über die Leitung 25 ab. Am Kopf der zweiten Entspannungskolonne 23 kann ein Wärmetauscher mit Kopfverteiler oder Kondensator 26 vorgesehen sein, der mitgerissene Tröpfchen der Waschflüssigkeit in die Entspannungskolonne zurückführt. Der Kondensator 26 kann gegebenenfalls durch eine Bypassleitung 27 überbrückt werden. Die Waschflüssigkeit verläßt die zweite Entspannungskolonne 23 über eine Leitung 28 und wird über eine Pumpe 29 durch einen Wärmetauscher 30 gepumpt, wo sie Wärme von der zur Absorptionskolonne 11 zurückgeführten, regenerierten Waschflüssigkeit aufnimmt. In der Leitung 28 kann ein zwischenbehälter 31 vorgesehen sein, in welchem gegebenenfalls die Hydrolyse von COS durchgeführt wird. Anschließend gelangt die Waschflüssigkeit in den Kopfbereich einer Strippkolonne 32, in welchem die Waschflüssigkeit im Gegenstrom zu einem Gasstrom, beispielsweise Wasserdampf, geführt wird. In der Strippkolonne 32 werden restliche Sauergasbestandteile aus der Waschflüssigkeit entfernt. Die Waschflüssigkeit verläßt den Sumpfbereich der Strippkolonne 32 über eine Leitung 33, während die abgestrippten Sauergasbestandteile über eine Leitung 34 in den Sumpfbereich der zweiten Entspannungskolonne 23 zurückgeführt werden. Die durch die Leitung 33 abströmende Waschflüssigkeit gelangt zu einem Verteiler 35, an welchem ein Teil der Waschflüssigkeit über eine Leitung 36 zu einem Aufkocher 38 transportiert wird, der die Flüssigkeit erhitzt und als Dampf über eine Leitung 39 in das Stripprohr zurückführt. Ein anderer Teil der Waschflüssigkeit gelangt vom Verteiler 35 über die Leitung 37 zu einer Pumpe 40, die, wie schematisch durch den Übertragungsweg 41 angedeutet ist, mit der Entspannungsturbine 18 verbunden ist. Die Entspannungsturbine liefert einen Teil der zum Antrieb der Pumpe 40 nötigen Energie. Über eine Leitung 42 gelangt die regenerierte, an Sauergasen arme Waschflüssigkeit in den Wärmetauscher 30, wo sie Wärme auf die durch die Leitung 28 in die Strippkolonne 32 geleitete Waschflüssigkeit überträgt. Die regenerierte Waschflüssigkeit wird dann über die Leitungen 43 und 13 in die Absorptionskolonne 11 zurückgeführt, wo sie erneut Sauergase aufnehmen kann. Vor Eintritt in die Absorptionskolonne kann ein weiterer Wärmetauscher 44 vorgesehen sein, welcher die Waschflüssigkeit auf die erforderliche Zulauftemperatur abkühlt. Ebenso können Filter und andere (nicht dargestellte) Reinigungseinrichtungen vorgesehen sein, um die Waschflüssigkeit vor ihrem Eintritt in die Absorptionskolonne 11 zu reinigen.

Im Bereich der Leitungen 43,13 können auch (nicht dargestellte) Zuleitungen für frische Waschflüssigkeit vorgesehen sein, falls die erforderliche Zulaufmenge nicht allein durch regenerierte Waschflüssigkeit aufrechterhalten werden kann.

Die Menge an zulaufender Waschflüssigkeit kann durch die Leistung der Pumpen und durch (nicht dargestellte) Ventil- und Drosseleinrichtungen reguliert werden.

Im folgenden wird die Erfindung anhand von Versuchsbeispielen näher erläutert.

### Beispiele:

### Beispiel 1: Pilotanlage zur Reinigung von Erdgas

Eine Pilotanlage zur Erdgasreinigung, bestehend aus einer Absorptionskolonne und einer Strippkolonne zur Regenerierung der Waschflüssigkeit, wurde mit 200 m³ / h (s.t.p.) Erdgas als Feedgas beschickt. Bei einem Druck von 6 MPa (60 bar abs.) und einer Temperatur von 40 °C enthielt das Feedgas die folgenden sauren Bestandteile: 9,52 %(v/v) H₂S, 2,99 %(v/v) CO₂ und 144 ppmᵥ CH₃SH. Der Absorptionsbereich der Kolonne wurde von einer 9 m hohen, regellosen Schüttung aus 25 mm Füllkörpern (IMTP 25, Fa. Norton) gebildet. Die Absorberkopftemperatur (d.h. die Temperatur der eingeleiteten, regenerierten Waschflüssigkeit) betrug 40 °C.

Das Gas wurde mit 0,875 m³/h einer Waschlösung behandelt, die folgende Zusammensetzung hatte: 38,1 Gew.-% MDEA, 3,5 Gew.-% Piperazin und 58,4 Gew.-% Wasser. Es wurde eine praktisch komplett regenerierte Waschflüssigkeit verwendet. Die Restbeladung der Waschflüssigkeit war geringer als 2 m³ Sauergasse pro 1.000 kg Waschflüssigkeit.

Das am Kopf der Absorptionskolonne abgezogene Reingas enthielt 0 % CO₂, 5,3 ppmᵥ H₂S, 26 ppmᵥ CH₃SH. Es konnten also 84,2 % des im Feedgas enthaltenen CH₃SH entfernt werden.

### Beispiel 2: Kommerzielle Anlage zur Reinigung von Erdgas

Eine kommerzielle Anlage zur Erdgasreinigung, bestehend aus einer Absorptionskolonne mit 20 Böden, einer Flash-Kolonne und einer Strippkolonne, wurde mit 53.625 m³ /h (s.t.p.) Erdgas als Feedgas beschickt. Bei einem Druck von 5,77 MPa (57,7 bar abs.) und einer Temperatur von 30 °C enthielt das Feedgas die folgenden sauren Bestandteile: 11,92 %(v/v) H₂S, 5,86 %(v/v) CO₂, 37 ppmᵥ CH₃SH, 6,1 ppmᵥ C₂H₅SH und 3,3 ppmᵥ C₃H₇SH. Die Absorberkopftemperatur betrug 48 °C.

Das Gas wurde mit 180 m³/h einer Waschlösung behandelt, die folgende Zusammensetzung hatte: 33,5 Gew.-% MDEA, 6,5 Gew.-% Piperazin und 60,0 Gew.-% Wasser. Auch hier wurde eine praktisch komplett regenerierte Waschflüssigkeit verwendet. Die Restbeladung der Waschflüssigkeit betrug wieder weniger als 2 m³ Sauergase pro 1.000 kg Waschflüssigkeit.

Das Reingas enthielt 0,37 % CO₂, 3,0 ppmᵥ H₂S, 2,5 ppmᵥ CH₃SH, 1,0 ppmᵥ C₂H₅SH und 1,0 ppmᵥ C₃H₇SH. Es wurden 94,4 % des im Feedgas enthaltenen CH₃SH, 86,6 % des C₂H₅SH und 75,6 % des C₃H₇SH entfernt.

## Patentansprüche

1. Verfahren zum Entfernen von Mercaptanen aus einem Mercaptane und weitere saure Gase, zumindest CO₂ und/oder H₂S, enthaltenden Fluidstrom, wobei man
den Fluidstrom in einer Absorptions- bzw. Extraktionszone mit einer Waschflüssigkeit in innigen Kontakt bringt, die wenigstens ein tertiäres aliphatisches Alkanolamin mit bis zu 12 C-Atomen und 0,5 bis 15 Gew.-% eines gesättigten 5- oder 6-gliedrigen N-Heterocyclus, der gegebenenfalls weitere Heteroatome enthält, ausgewählt unter O und N, als Aktivator enthält, wobei man der Absorptions- bzw. Extraktionszone eine solche Menge der Waschflüssigkeit zuführt, daß sie bezogen auf die zu entfernenden sauren Gase einen Überschuß des aliphatischen Alkanolamins enthält und CO₂ und H₂S bis auf höchstens 500 ppm CO₂ und höchstens 10 ppm H₂S aus dem Fluidstrom entfernt und Mercaptane abgereichert werden, und
den weitgehend gereinigten Fluidstrom und die beladene Waschflüssigkeit voneinander trennt und aus der Absorptions- bzw. Extraktionszone abführt.

2. Verfahren gemäß Anspruche 1, **dadurch gekennzeichnet, daß** die Waschflüssigkeit 10 bis 70 Gew.-% des Alkanolamins enthält.

3. Verfahren gemäß einem der Ansprüche 1 oder 2, **dadurch gekennzeichnet, daß** man als tertiäres Alkanolamin Methyldiethanolamin verwendet.

4. Verfahren gemäß einem der Ansprüche 1 bis 3, **dadurch gekennzeichnet**, der Aktivator ausgewählt ist aus der Gruppe bestehend aus Piperazin, Methylpiperazin und Morpholin.

5. Verwendung eines Gemisches von mindestens einem tertiären aliphatischen Alkanolamin mit bis zu 12 C-Atomen und mindestens einem als Aktivator dienenden, gesättigten 5- oder 6-gliedrigen N-Heterocyclus, der gegebenenfalls weitere Heteroatome, ausgewählt unter O und N, enthält, zum Entfernen von Mercaptanen aus mercaptanhaltigen Fluidströmen.

6. Verwendung gemäß Anspruch 5, **dadurch gekennzeichnet, daß** das Alkanolamin ein tertiäres Alkanolamin, vorzugsweise Methyldiethanolamin ist.

7. Verwendung gemäß einem der Ansprüche 5 oder 6, **dadurch gekennzeichnet, daß** der Aktivator Piperazin oder Methylpiperazin ist.

8. Verwendung gemäß Anspruch 7, **dadurch gekennzeichnet, daß** das Gemisch zwischen 10 und 70 Gew.-% Methyldiethanolamin, zwischen 0,5 und 15 Gew.-% Piperazin und Wasser enthält.

## Claims

1. A process for removing mercaptans from a fluid stream comprising mercaptans and further acidic gases, at least CO₂ and/or H₂S, which comprises
intimately contacting the fluid stream in an absorption or extraction zone with a scrubbing liquor comprising at least one tertiary aliphatic alkanolamine of up to 12 carbon atoms and from 0.5 to 15% by weight of a saturated 5- or 6-membered N-heterocycle which optionally contains further heteroatoms selected from oxygen and nitrogen, as activator, the amount of scrubbing liquor being supplied to the absorption or extraction zone being such that the scrubbing liquor contains an excess of aliphatic alkanolamine, based on the acidic gases to be removed, and CO₂ and H₂S, except at most 500 ppm of CO₂ and at most 10 ppm of H₂S, are removed from the fluid stream and the level of mercaptans is lowered, and separating the substantially decontaminated fluid stream and the contaminated scrubbing liquor and discharging them from the absorption or extraction zone.

2. A process as claimed in claim 1, wherein the scrubbing liquor contains from 10 to 70% by weight of the alkanolamine.

3. A process as claimed in claim 1 or claim 2, wherein the tertiary alkanolamine used is methyldiethanolamine.

4. A process as claimed in any of claims 1 to 3, wherein the activator is selected from the group consisting of piperazine, methylpiperazine and morpholine.

5. The use of a mixture of at least one tertiary aliphatic alkanolamine of up to 12 carbon atoms and at least one saturated 5- or 6-membered N-heterocycle which optionally contains further heteroatoms selected from O and N and which acts as an activator, for removing mercaptans from fluid streams comprising same.

6. The use as claimed in claim 5, wherein the alkanolamine is a tertiary alkanolamine, preferably methyldiethanolamine.

7. The use as claimed in claim 5 or 6, wherein the activator is piperazine or methylpiperazine.

8. The use as claimed in claim 7, wherein the mixture contains from 10 to 70% by weight of methyldiethanolamine, from 0.5 to 15% by weight of piperazine, and water.

## Revendications

1. Procédé pour éliminer des mercaptans à partir d'un courant de fluide contenant des mercaptans et d'autres gaz acides, au moins CO₂ et/ou H₂S, procédé dans lequel
on met en contact intime le courant de fluide, dans une zone d'absorption ou d'extraction, avec un liquide de lavage, qui contient au moins une alcanolamine aliphatique tertiaire ayant jusqu'à 12 atomes de carbone et en tant qu'activateur 0,5 à 15 % en poids d'un composé N-hétérocyclique saturé à 5 ou 6 chaînons, qui éventuellement contient encore d'autres hétéroatomes choisis parmi O et N, où on envoie à la zone d'absorption ou d'extraction une quantité du liquide de lavage telle que ce liquide, par rapport aux gaz acides devant être éliminés, contienne un excès de l'alcanolamine aliphatique, et telle que le CO₂ et le H₂S, jusqu'à une valeur maximale de 500 ppm de CO₂ et de 10 ppm de H₂S, soient éliminés du courant de fluide, avec appauvrissement en mercaptans, et
on sépare l'un de l'autre le courant de fluide presque complètement purifié et le liquide de lavage chargé, et on les évacue de la zone d'absorption ou d'extraction.

2. Procédé selon la revendication 1, **caractérisé en ce que** le liquide de lavage contient 10 à 70 % en poids de l'alcanolamine.

3. Procédé selon l'une des revendications 1 ou 2, **caractérisé en ce qu'**en tant qu'alcanolamine tertiaire on utilise de la méthyldiéthanolamine.

4. Procédé selon l'une des revendications 1 à 3, **caractérisé en ce que** l'activateur est choisi dans l'ensemble consistant en la pipérazine, la méthylpipérazine et la morpholine.

5. Utilisation d'un mélange d'au moins un alcanolamine aliphatique tertiaire ayant jusqu'à 12 atomes de carbone et d'au moins un composé N-hétérocyclique saturé à 5 ou 6 chaînons, servant d'activateur, qui éventuellement contient encore d'autres hétéroatomes, choisis parmi O et N, pour éliminer des mercaptans de courants de fluide contenant des mercaptans.

6. Utilisation selon la revendication 5, **caractérisée en ce que** l'alcanolamine est une alcanolamine tertiaire, de préférence la méthyldiéthanolamine.

7. Utilisation selon l'une des revendications 5 ou 6, **caractérisée en ce que** l'activateur est la pipérazine ou la méthylpipérazine.

8. Utilisation selon la revendication 7, **caractérisée en ce que** le mélange contient de 10 à 70 % en poids de méthyldiéthanolamine, de 0,5 à 15 % en poids de pipérazine, et de l'eau.
